**Europäisches Patentamt**

**European Patent Office**

**Office européen des brevets**

(11) Numéro de publication: **0 004 822**
**A1**

# (12) DEMANDE DE BREVET EUROPEEN

(21) Numéro de dépôt: **79400229.5**

(22) Date de dépôt: **06.04.79**

(51) Int. Cl.²: **H 04 L 27/22**

(30) Priorité: **06.04.78 FR 7810190**

(43) Date de publication de la demande:
**17.10.79 Bulletin 79/21**

(84) Etats Contractants Désignés:
**BE DE GB IT SE**

(71) Demandeur: **LE MATERIEL TELEPHONIQUE S.A.**
**46-47 Quai Alphonse Le Gallo**
**F-92103 Boulogne Billancourt Cedex(FR)**

(72) Inventeur: **Houdard, Jean-Pierre**
**Le MATERIEL TELEPH. 46-47 Quai Alphonse Le Gallo**
**F-92103 Boulogne-Billancourt Cedex(FR)**

(74) Mandataire: **Schaub, Bernard et al,**
**Le MATERIEL TELEPHONIQUE 46-47, quai Alphonse Le**
**Gallo**
**F-92103 Boulogne Billancourt Cedex(FR)**

(54) Procédé et dispositif de démodulation d'un signal modulé en phase différentielle.

(57) L'invention concerne un procédé et un dispositif de démodulation d'un signal d'entrée numérique modulé en phase différentielle en un signal de sortie représentant l'information numérique significative du message transmis.

Le procédé consiste à mémoriser les deux derniers échantillons numériques reçus du signal d'entrée, à calculer les suites des phases des échantillons numériques du signal d'entrée avant et après le dernier changement de phase initiale du signal d'entrée, à substituer à la différence entre deux phases de même rang le groupe d'éléments binaires correspondant du signal de sortie.

Application aux systèmes de transmission de signaux modulés en phase différentielle.

EP 0 004 822 A1

·/· · ·

Fig.1

1

# PROCEDE ET DISPOSITIF DE DEMODULATION D'UN SIGNAL MODULE EN PHASE DIFFERENTIELLE

La présente invention concerne un procédé et un dispositif de démodulation d'un signal d'entrée numérique modulé en phase différentielle en un signal de sortie représentant l'information numérique significative du message transmis.

Associé à un convertisseur analogique-numérique, un tel dispositif permet de démoduler un signal analogique modulé en phase différentielle.

Selon une caractéristique de l'invention, le procédé de démodulation d'un signal d'entrée y, numérique, modulé en phase différentielle, constitué de suites d'échantillons numériques telles que $y_j(n)$, $y_k(n)$, $y_1(n)$, représentatives de signaux sinusoïdaux échantillonnés à la fréquence F et codés, tels que $x_j$, $x_k$, $x_1$, de fréquence f, se succèdant dans le temps à chaque changement de phase initiale d'un signal analogique x représentant le signal y avant échantillonnage et codage, le procédé de démodulation dudit signal d'entrée y en un signal de sortie z représentant l'information numérique significative du message transmis consiste à :

a) mémoriser les deux derniers échantillons numériques reçus du signal d'entrée y ;

b) initialiser un premier générateur à l'aide de deux échantillons numériques mémorisés, par exemple $y_k(1)$ et $y_k(2)$ ;

c) fournir à l'aide du premier générateur la suite u(n) des échantillons numériques de la suite $y_k(n)$ à partir des deux

échantillons numériques $y_k(1)$ et $y_k(2)$ ;

d) calculer à l'aide d'un premier organe de calcul la suite $s(n)$ des phases des échantillons numériques du signal sinusoïdal $x_k$ de phase initiale $\phi_k$, à partir de la suite $u(n)$ des échantillons numériques du signal sinusoïdal $x_k$ ;

e) comparer chaque échantillon numérique $y(n+i)$ du signal d'entrée $y$ avec l'échantillon numérique de même rang $u(n+i)$ de la suite $u(n)$ fournie par le premier générateur ;

f) α) si $u(n+i)$ est différent de $y(n+i)$, ou encore si $y(n+i)$ est égal à $y_1(1)$ :

- initialiser un deuxième générateur à l'aide des deux échantillons numériques $y_1(1)$ et $y_1(2)$ ;

- fournir à l'aide du deuxième générateur la suite $v(n)$ des échantillons numériques de la suite $y_1(n)$ à partir des deux échantillons numériques $y_1(1)$ et $y_1(2)$, le premier générateur continuant à fournir la suite $u(n)$ des échantillons numériques de la suite $y_k(n)$ ;

- comparer chaque échantillon numérique du signal $y$ avec l'échantillon numérique de même rang de la suite $v(n)$ fournie par le deuxième générateur ;

- calculer à l'aide d'un deuxième organe de calcul la suite $t(n)$ des phases des échantillons numériques du signal sinusoïdal $x_1$ de phase initiale $\phi_1$ à partir de la suite $v(n)$ des échantillons numériques du signal sinusoïdal $x_1$ ;

- exprimer la différence de phase $\phi_1 - \phi_k$ entre chaque terme de la suite $t(n)$ des phases des échantillons numériques du signal sinusoïdal $x_1$ calculée par le deuxième organe de calcul et le terme de même rang de la suite des phases des échantillons numériques du signal sinusoïdal $x_k$ calculée par le premier organe de calcul ;

- substituer à la différence de phase $\phi_1 - \phi_k$ le groupe d'éléments binaires du signal de sortie $z$ choisi pour représenter la différence de phase $\phi_1 - \phi_k$ selon une loi de correspondance préétablie ;

β) si $u(n+i)$ est égal à $y(n+i)$, ou encore si $y(n+i)$ est égal à $y_k(n+i)$ :

- exprimer la différence de phase $\phi_k - \phi_j$ entre chaque terme de la suite s(n) des phases des échantillons numériques du signal sinusoïdal $x_k$ calculée par le premier organe de calcul et le terme de même rang de la suite t(n) des phases des échantillons numériques du signal sinusoïdal $x_j$ calculée par le deuxième organe de calcul, le deuxième générateur ayant été préalablement initialisé par les échantillons numériques $y_j(1)$ et $y_j(2)$ pour fournir la suite des échantillons numériques du signal sinusoïdal $x_j$ ;

– substituer à la différence de phase $\phi_k - \phi_j$ le groupe d'éléments binaires du signal de sortie z choisi pour représenter la différence de phase $\phi_k - \phi_j$ selon ladite loi de correspondance.

La présente invention propose aussi un dispositif pour la mise en oeuvre du procédé défini ci-dessus.

Selon une caractéristique de l'invention, le dispositif de démodulation comporte un premier et un deuxième organe de mémorisation pour mémoriser les deux derniers échantillons numériques reçus du signal d'entrée y, un premier générateur pour fournir la suite d'échantillons numériques u(n), un premier organe de calcul pour calculer la suite des phases s(n), un deuxième générateur pour fournir la suite d'échantillons numériques v(n), un deuxième organe de calcul pour calculer la suite des phases t(n), un organe de comparaison pour comparer chaque échantillon numérique du signal d'entrée y avec l'échantillon numérique de même rang de l'une des suites u(n) ou v(n), un premier organe de commutation pour commuter une borne d'entrée de l'organe de comparaison de la borne de sortie de l'un des générateurs sur la borne de sortie de l'autre générateur suivant le résultat de la comparaison, un organe de soustraction pour exprimer la différence de phase entre chaque terme de la suite des phases calculée par l'un des organes de calcul et le terme de même rang de la suite des phases calculée par l'autre organe de calcul, un organe de substitution contenant la loi de correspondance préétablie pour substituer à la différence de phase exprimée par l'organe de soustraction le groupe d'éléments binaires du signal de sortie z choisi pour représenter cette différence de phase selon ladite loi de correspondance.

Les objets et caractéristiques de l'invention apparaîtront plus clairement à la lecture de la description suivante d'un exemple de réalisation, ladite description étant faite en relation avec les dessins ci-annexés dans lesquels :

La figure 1 présente un schéma synoptique du dispositif de démodulation selon l'invention.

La figure 2 présente un schéma du premier générateur utilisé dans le dispositif de démodulation selon l'invention.

La figure 3 présente un schéma du premier organe de calcul utilisé dans le dispositif de démodulation selon l'invention.

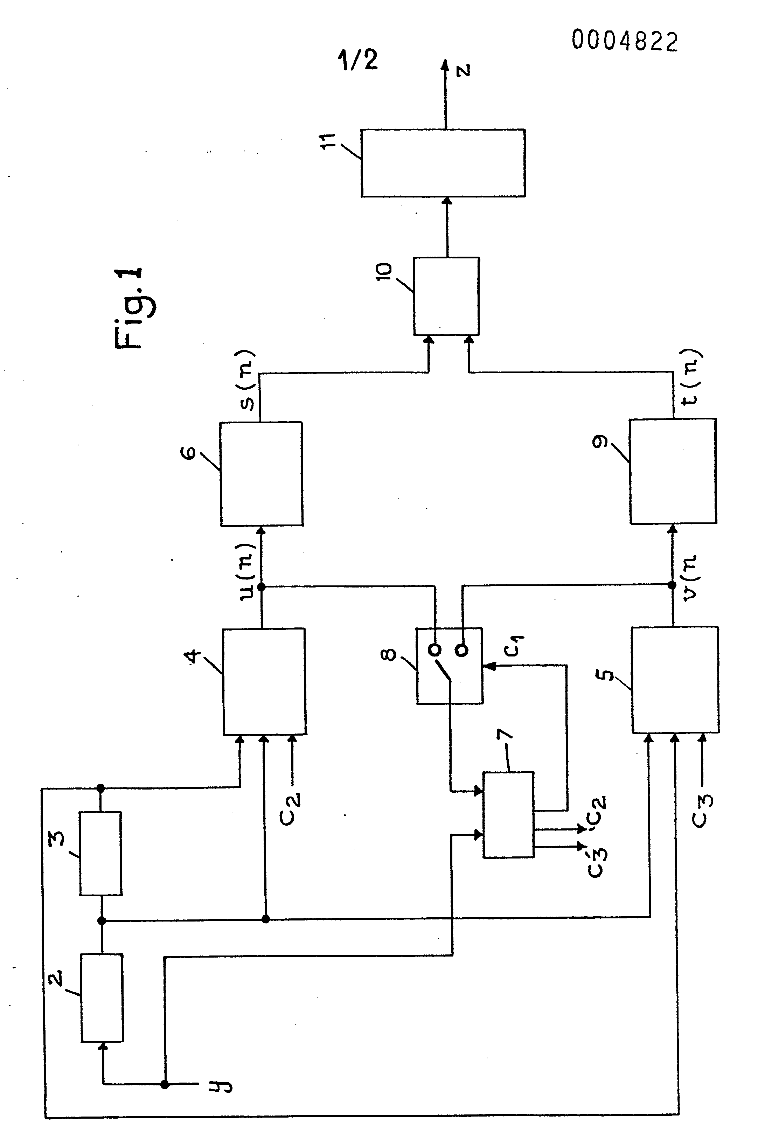

Si l'on se réfère maintenant à la figure 1, on voit que le signal d'entrée y modulé en phase différentielle est appliqué à la borne d'entrée d'un premier organe de mémorisation 2. Le signal d'entrée y est constitué de suite d'échantillons numériques telles que $y_j(n)$, $y_k(n)$, $y_1(n)$, représentatives de signaux sinusoïdaux échantillonnés à la fréquence F et codés, tels que $x_j$, $x_k$, $x_1$, de fréquence f, se succèdant dans le temps à chaque changement de phase initiale d'un signal analogique x représentant le signal y avant échantillonnage et codage. La borne de sortie du premier organe de mémorisation 2 est reliée à la borne d'entrée d'un deuxième organe de mémorisation 3. Ces deux organes de mémorisation permettent ainsi de mémoriser à tout instant les deux derniers échantillons numériques reçus du signal d'entrée y, et d'initialiser un premier générateur 4 ou un deuxième générateur 5 à l'aide de ces deux échantillons numériques. Dans un mode préféré de réalisation, les deux organes de mémorisation 2 et 3 sont constitués par deux registres.

Si le premier générateur 4 a été initialisé à l'aide des deux échantillons numériques de rangs 1 et 2 de la suite : $y_k(n)$ : $y_k(1)$ et $y_k(2)$, ce générateur va fournir la suite u(n) des échantillons numériques du signal sinusoïdal $x_k$ à partir des deux échantillons numériques $y_k(1)$ et $y_k(2)$. Les échantillons

numériques de la suite u(n) sont transmis à un premier organe de calcul 6 qui calcule la suite s(n) des phases des échantillons numériques du signal sinusoïdal $x_k$ à partir de la suite u(n) des échantillons numériques du signal sinusoïdal $x_k$.

Les échantillons numériques de la suite u(n) sont également transmis à un organe de comparaison 7 via un premier organe de commutation 8.

L'organe de comparaison 7 compare chaque échantillon numérique u (n + i) de la suite u(n) avec l'échantillon numérique y (n + i) de même rang du signal d'entrée y.

Le résultat de la comparaison apparait sous forme de trois signaux de commande $C_1$, $C_2$, $C_3$ commandant respectivement le premier organe de commutation 8, l'initialisation du premier générateur 4 et l'initialisation du deuxième générateur 5.

- Si u (n + i) est différent de y (n + i), ou encore si y (n + i) est égal à $y_1$(1) le signal $C_3$ commande l'initialisation du deuxième générateur 5 à l'aide des deux échantillons numériques de rangs 1 et 2 de la suite $y_1$(n) : $y_1$(1) et $y_1$(2).

Le signal de commande $C_1$ du premier organe de commutation 8 assure alors la commutation de l'une des bornes d'entrée de l'organe de comparaison 7 de la borne de sortie du premier générateur 4 sur la borne de sortie du deuxième générateur 5.

Le deuxième générateur 5 va alors fournir la suite v(n) des échantillons numériques du signal sinusoïdal $x_1$ à partir des deux échantillons numériques $y_1$(1) et $y_1$(2), le premier générateur 4 continuant à fournir la suite u(n) des échantillons numériques du signal sinusoïdal $x_k$. Les échantillons numériques de la suite v(n) sont transmis à un deuxième organe de calcul 9 qui calcule la suite t(n) des phases des échantillons numériques du signal sinusoïdal $x_1$ à partir de la suite v(n) des échantillons numériques du signal sinusoïdal $x_1$.

6

0004822

Un organe de soustraction 10 exprime la différence entre chaque terme de la suite $s(n)$ des phases des échantillons numériques du signal sinusoïdal $x_k$ calculée par le premier organe de calcul 6 et le terme de même rang de la suite $t(n)$ des phases des échantillons numériques du signal sinusoïdal $x_1$ calculée par le deuxième organe de calcul 9. Puisque les termes sont de même rang, la différence des phases est égale à la différence des phases initiales entre les signaux sinusoïdaux $x_1$ et $x_k$, soit $\phi_1 - \phi_k$.

Un organe de substitution 11 substitue à la différence des phases $\phi_1 - \phi_k$ le groupe d'éléments binaires du signal de sortie z choisi pour représenter la différence de phase $\phi_1 - \phi_k$ selon la loi de correspondance préétablie.

- Si $u(n + i)$ est égal à $y(n + i)$, ou encore si $y(n + i)$ est égal à $y_k(n + i)$, l'organe de soustraction 10 exprime la différence des phases entre chaque terme de la suite $s(n)$ des phases des échantillons numériques du signal sinusoïdal $x_k$ calculée par le premier organe de calcul 6 et le terme de même rang de la suite $t(n)$ des phases des échantillons numériques du signal sinusoïdal $x_j$ calculée par le deuxième organe de calcul, le deuxième générateur ayant été préalablement initialisé à l'aide des échantillons numériques $y_j(1)$ et $y_j(2)$ par l'intermédiaire du signal de commande $C_3$ pour fournir la suite des échantillons numériques du signal sinusoïdal $x_j$.

Cette différence de phases est égale à la différence des phases initiales entre les signaux sinusoïdaux $x_k$ et $x_j$, soit $\phi_k - \phi_j$.

L'organe de substitution 11 substitue à la différence de phases $\phi_k - \phi_j$ le groupe d'éléments binaires choisi pour représenter la différence $\phi_k - \phi_j$ selon la loi de correspondance préétablie. Dans un mode préféré de réalisation, l'organe de substitution 11 est une mémoire morte contenant la loi de correspondance préétablie.

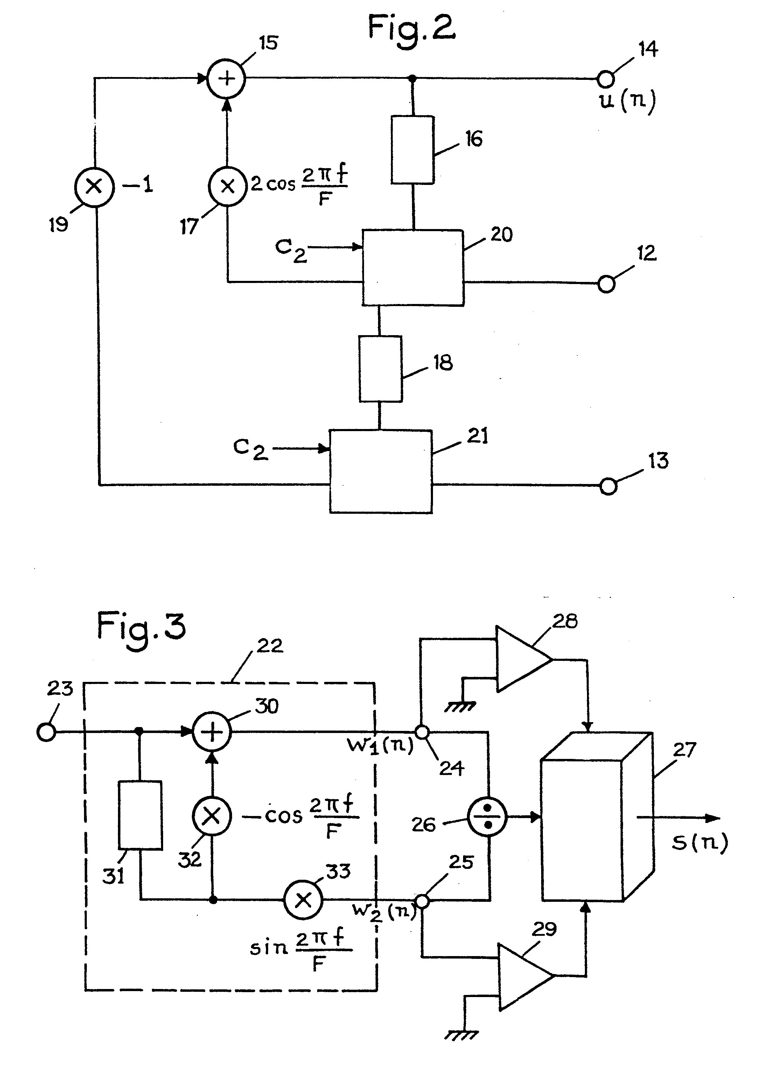

Si l'on se réfère maintenant à la figure 2, on voit que le premier générateur est muni de deux bornes d'initialisation 12 et 13 et d'une borne de sortie 14. Ce générateur n'est autre qu'un filtre numérique récursif de fonction de transfert en z :

$$H_1(z) = \frac{1}{1 - 2\,(\cos\frac{2\pi f}{F})\,z^{-1} + z^{-2}}.$$ Ce circuit comporte une première boucle de retour reliant la borne de sortie 14 à un premier organe d'addition 15 via un premier organe de retard 16 monté en série avec un premier organe de multiplication 17 de coefficient $2\,(\cos\frac{2\pi f}{F})$. Ce circuit comporte une deuxième boucle de retour reliant le point commun à l'organe de retard 16 et à l'organe de multiplication 17 à l'organe d'addition 15 via un deuxième organe de retard 18 monté en série avec un deuxième organe de multiplication 19 de coefficient − 1. Le point commun à l'organe de retard 16 et à l'organe de multiplication 17 est monté commutable, par l'intermédiaire d'un deuxième organe de commutation 20 commandé par le signal de commande d'initialisation du premier générateur $C_2$, sur la borne d'initialisation 12 reliée à la borne de sortie du premier organe de mémorisation 2.

Le point commun à l'organe de retard 18 et à l'organe de multiplication 19 est monté commutable, par l'intermédiaire d'un troisième organe de commutation 21 commandé par le signal de commande $C_2$, sur la borne d'initialisation 13 reliée à la borne de sortie du deuxième organe de mémorisation 3. Le signal $C_2$ est tel que, par l'intermédiaire des organes de commutation 20 et 21, la première et la deuxième boucle de retour s'ouvrent pour permettre l'initialisation et se ferment une fois le premier générateur initialisé.

Dans un mode préféré de réalisation, l'ensemble formé par l'organe de retard 16 et par l'organe de commutation 20 est constitué par un premier registre muni de deux entrées d'écriture reliées respectivement à la borne d'initialisation 12 et à la borne de sortie 14, d'une entrée de validation de l'une des deux entrées d'écriture destinée à recevoir le signal de commande $C_2$ et, d'une sortie reliée à l'organe de multiplication 17. L'ensemble formé par l'organe de retard 18 et par l'organe de commutation 21 est constitué par un deuxième registre identique au premier, muni de deux entrées d'écriture reliées respectivement à la borne d'initialisation 13 et à la sortie du premier registre, d'une entrée de validation de l'une des deux entrées d'écriture destinée à recevoir le signal de commande $C_2$ et d'une sortie reliée à l'organe de multiplication 19.

La suite $u(n)$ générée par le premier générateur est une suite récurrente définie par la formule :

$$u(n) = 2 \left( \cos \frac{2 \pi f}{F} \right) . \, u(n - 1) - u(n - 2).$$

On démontre facilement qu'un tel générateur peut fournir la suite des échantillons numériques d'un signal sinusoïdal d'amplitude A, de fréquence f, de phase initiale $\phi$, échantillonné à la fréquence F, à partir de deux valeurs initiales prises aux instants d'échantillonnage $\frac{n - 1}{F}$ et $\frac{n - 2}{F}$ :

$$u(n - 1) = A \sin \left[ (n - 1) \frac{2 \pi f}{F} + \phi \right] \text{ et}$$

$$u(n - 2) = A \sin \left[ (n - 2) \frac{2 \pi f}{F} + \phi \right]$$

On obtient en effet, en posant $\theta = \frac{2 \pi f}{F}$ :

$$u(n - 1) = A \sin \left[ (n - 1) \theta + \phi \right]$$

$$u(n - 2) = A \sin \left[ (n - 2) \theta + \phi \right]$$

$$u(n) = 2 A \cos \theta . \sin \left[ (n - 1) \theta + \phi \right] - A \sin \left[ (n - 2) \theta + \phi \right]$$

$$u(n) = 2 A \cos \theta . \left[ \sin (n \theta + \phi) . \cos \theta - \sin \theta . \cos (n \theta + \phi) \right]$$
$$\qquad - A \left[ \sin (n \theta + \phi) . \cos 2 \theta - \sin 2 \theta . \cos (n \theta + \phi) \right]$$

$$u(n) = A \sin (n \theta + \phi) \left[ 2 \cos^2 \theta - \cos 2\theta \right]$$
$$\qquad + A \cos (n \theta + \phi) \left[ \sin 2 \theta - 2 \sin \theta \cos \theta \right]$$

soit :

$$u(n) = A \sin (n \theta + \phi)$$

ou encore :

$$u(n) = A \sin \left( n \frac{2 \pi f}{F} + \phi \right)$$

$u(n)$ représente bien l'échantillon d'un signal sinusoïdal d'amplitude A, de fréquence f, de phase initiale $\phi$, échantillonné à la fréquence F, pris à l'instant d'échantillonnage $\frac{n}{F}$ .

Le deuxième générateur est identique au premier générateur décrit à la figure 2 et fonctionne de la même façon en remplaçant le signal de commande d'initialisation $C_2$ par le signal de commande d'initialisation $C_3$.

A la détection d'une différence à la sortie de l'organe de comparaison 7, le signal de commande $C_1$ du premier organe de commutation 8 devient actif alors que les signaux de commande $C_2$ et $C_3$ du deuxième organe de commutation 20 et du troisième organe de commutation 21 deviennent actifs une fois sur deux.

Si l'on se réfère maintenant à la figure 3, on voit que le premier organe de calcul est constitué premièrement par un filtre numérique non récursif 22 muni d'une borne d'entrée 23 reliée à la borne de sortie 14 du premier générateur et de deux bornes de sortie 24 et 25, deuxièmement par un organe de division 26 muni de deux bornes d'entrée reliées aux deux bornes de sortie du filtre numérique 22, troisièmement par une mémoire morte 27 adressée d'une part par le signal de sortie de l'organe de division 26, d'autre part par le signal de sortie d'un premier détecteur de signe 28 et par le signal de sortie d'un deuxième détecteur de signe 29. Le premier détecteur de signe 28 est alimenté par le signal présent sur la borne de sortie 24, le deuxième détecteur de signe 29 par le signal présent sur la borne de sortie 25.

Le filtre numérique 22 a pour fonction de transfert en z

$$H_2(z) = 1 - e^{-j\frac{2\pi f}{F}} \cdot z^{-1}$$

et comporte un deuxième organe d'addition 30, un troisième organe de retard 31, un troisième organe de multiplication 32 de coefficient $-\cos\frac{2\pi f}{F}$, et un quatrième organe de multiplication 33 de coefficient $\sin\frac{2\pi f}{F}$. Dans un mode préféré de réalisation, le troisième organe de retard 31 est constitué par un troisième registre identique au premier et au deuxième registres utilisés dans le premier et le deuxième générateur. Les bornes de sortie 24 et 25 du filtre numérique 22 fournissent respectivement la partie réelle et la partie imaginaire du signal de sortie du filtre numérique 22.

Soient $w_1(n)$ et $w_2(n)$ les suites d'échantillons numériques fournies respectivement par les bornes de sortie 24 et 25 du filtre numérique 22, u(n) représentant la suite d'échantillons numériques alimentant la borne d'entrée 23.

On a vu précédemment que u(n) se met sous la forme :

$$u(n) = A \sin (n \theta + \phi)$$

On voit d'après la figure 3 que :

$$w_1(n) = u(n) - \cos \theta . u(n - 1)$$

soit encore :

$$w_1(n) = A \sin (n \theta + \phi) - \cos \theta . A \sin [(n - 1) \theta + \phi]$$

$$w_1(n) = A \sin (n \theta + \phi) - A \cos \theta [\sin (n \theta + \phi) . \cos \theta - \sin \theta . \cos (n \theta + \phi)]$$

$$w_1(n) = A \sin (n \theta + \phi) (1 - \cos^2 \theta) + A \sin \theta . \cos \theta . \cos (n \theta + \phi)$$

$$w_1(n) = A [\sin (n \theta + \phi) \sin^2 \theta + \sin \theta . \cos \theta . \cos (n \theta + \phi)]$$

$$w_1(n) = A \sin \theta [\sin (n \theta + \phi) . \sin \theta + \cos \theta . \cos (n \theta + \phi)]$$

$$w_1(n) = \sin \theta . A \cos [(n - 1) \theta + \phi]$$

On voit également d'après la figure 3 que :

$$w_2(n) = \sin \theta . u(n - 1)$$

soit encore :

$$w_2(n) = \sin \theta . A \sin [(n - 1) \theta + \phi]$$

L'organe de division 26 fournit une suite d'échantillons numériques $w_3(n)$ telle que :

$$w_3(n) = \frac{w_2(n)}{w_1(n)} \text{, c'est-à-dire :}$$

$$w_3(n) = \text{tg} [(n - 1) \theta + \phi]$$

Connaissant les signes de $w_1(n)$, de $w_2(n)$ et la valeur de $w_3(n)$, il est possible d'en déduire la valeur de la phase $(n - 1) \theta + \phi$. Pour cela il est prévu une mémoire morte 27, contenant une table des tangentes, adressée par les signaux de sortie de l'organe de division 26 et des détecteurs de signe 28 et 29. La suite des phases s(n) apparait en sortie de la mémoire 27.

Le deuxième organe de calcul fournissant la suite des phases t(n) est identique au premier organe de calcul et fonctionne de la même façon.

0004822

Bien que les principes de la présente invention aient été décrits ci-dessus en relation avec des exemples particuliers de réalisation, on comprendra clairement que ladite description est faite seulement à titre d'exemple et ne limite pas la portée de l'invention.

REVENDICATIONS

1. Procédé de démodulation d'un signal d'entrée y numérique, modulé en phase différentielle, constitué de suites d'échantillons numériques telles que $y_j(n)$, $y_k(n)$, $y_1(n)$ représentatives de signaux sinusoïdaux échantillonnés à la fréquence F et codés, tels que $x_j$, $x_k$, $x_1$, de fréquence f, se succédant dans le temps à chaque changement de phase initiale du signal analogique x représentant le signal y avant échantillonnage et codage, procédé de démodulation dudit signal d'entrée y en un signal de sortie z représentant l'information numérique significative du message transmis, caractérisé en ce qu'il consiste à :

a) mémoriser les deux derniers échantillons numériques reçus du signal d'entrée y ;

b) initialiser un premier générateur à l'aide de deux échantillons numériques mémorisés, par exemple $y_k(1)$ et $y_k(2)$ ;

c) fournir à l'aide du premier générateur la suite u(n) des échantillons numériques du signal sinusoïdal $x_k$ à partir des deux échantillons numériques $y_k(1)$ et $y_k(2)$ ;

d) calculer à l'aide d'un premier organe de calcul la suite s(n) des phases des échantillons numériques du signal sinusoïdal $x_k$ de phase initiale $\phi_k$, à partir de la suite u(n) des échantillons numériques du signal sinusoïdal $x_k$ ;

e) comparer chaque échantillon numérique y (n + i) du signal d'entrée y avec l'échantillon numérique de même rang u (n + i) de la suite u(n) fournie par le premier générateur ;

f) α) si u (n + i) est différent de y (n + i), ou encore si y (n + i) est égal à $y_1(1)$ :

- initialiser un deuxième générateur à l'aide des deux échantillons numériques mémorisés $y_1(1)$ et $y_1(2)$ ;

- fournir à l'aide du deuxième générateur la suite v(n) des échantillons numériques du signal sinusoïdal $x_1$ à partir des deux échantillons numériques $y_1(1)$ et $y_1(2)$, le premier générateur continuant à fournir la suite u(n) des échantillons numériques du signal sinusoïdal $x_k$ ;

- comparer chaque échantillon numérique du signal y avec l'échantillon numérique de même rang de la suite v(n) fournie par le deuxième générateur ;

- calculer à l'aide d'un deuxième organe de calcul la suite $t(n)$ des phases des échantillons numériques du signal sinusoïdal $x_1$ de phase initiale $\phi_1$ à partir de la suite $v(n)$ des échantillons numériques du signal sinusoïdal $x_1$ ;

- exprimer la différence de phase $\phi_1 - \phi_k$ entre chaque terme de la suite $t(n)$ des phases des échantillons du signal sinusoïdal $x_1$ calculée par le deuxième organe de calcul et le terme de même rang de la suite $s(n)$ des phases des échantillons du signal sinusoïdal $x_k$ calculée par le premier organe de calcul ;

- substituer à la différence de phase $\phi_1 - \phi_k$ le groupe d'éléments binaires du signal de sortie $z$ choisi pour représenter la différence de phase $\phi_1 - \phi_k$ selon une loi de correspondance préétablie ;

$\beta$) si $u(n + i)$ est égal à $y(n + i)$, ou encore $y(n + i)$ est égal à $y_k(n + i)$ :

- exprimer la différence de phase $\phi_k - \phi_j$ entre chaque terme de la suite $s(n)$ des phases des échantillons numériques du signal sinusoïdal $x_k$ calculée par le premier organe de calcul et le terme de même rang de la suite $t(n)$ des phases des échantillons numériques du signal sinusoïdal $x_j$ calculée par le deuxième organe de calcul, le deuxième générateur ayant été préalablement initialisé par les échantillons numériques $y_j(1)$ et $y_j(2)$ pour fournir la suite des échantillons numériques du signal sinusoïdal $x_j$ ;

- substituer à la différence de phase $\phi_j - \phi_k$ le groupe d'éléments binaires du signal de sortie $z$ choisi pour représenter la différence de phase $\phi_j - \phi_k$ selon ladite loi de correspondance.

2. Dispositif pour la mise en oeuvre du procédé selon la revendication 1, caractérisé en ce qu'il comporte un premier et un deuxième organes de mémorisation pour mémoriser les deux derniers échantillons numériques reçus du signal d'entrée $y$, un premier générateur pour fournir la suite d'échantillons numériques $u(n)$, un premier organe de calcul pour calculer la suite des phases $s(n)$, un deuxième générateur pour fournir la suite d'échantillons numériques $v(n)$, un deuxième organe de calcul pour calculer la suite des phases $t(n)$, un organe de comparaison pour comparer chaque échantillon numérique du signal d'entrée $y$ avec l'échantillon numérique de même rang de l'une des suites $u(n)$ ou $v(n)$, un premier organe de commutation pour commuter une borne de sortie de l'un des générateurs sur la borne de sortie de l'autre générateur suivant le résultat de la comparaison, un organe de soustraction pour exprimer la différence de phase entre chaque terme de la suite des phases calculée par l'un des organes de calcul et le terme de même rang de la suite des phases calculée par l'autre organe de calcul, un organe de substitution contenant la loi de correspondance préétablie pour substituer à la différence de phase exprimée par l'organe de soustraction le groupe d'éléments binaires du signal de sortie z choisi pour représenter cette différence de phase selon la loi de correspondance préétablie.

3. Dispositif selon la revendication 2, caractérisé en ce que le premier organe de mémorisation présente une borne d'entrée destinée à recevoir le signal d'entrée y et une borne de sortie connectée à la borne d'entrée du deuxième organe de mémorisation, au premier et au deuxième générateur et en ce que le deuxième organe de mémorisation présente une borne de sortie connectée au premier et au deuxième générateur.

4. Dispositif selon la revendication 3, caractérisé en ce que le premier générateur est un filtre numérique récursif de fonction de transfert en z : $H_1(z) = \dfrac{1}{1 - 2 (\cos \frac{2 \pi f}{F}) z^{-1} + z^{-2}}$ , muni de deux bornes d'initialisation et d'une borne de sortie, comportant une première boucle de retour reliant la borne de sortie du filtre numérique récursif à un premier organe d'addition via un premier organe de retard monté en série avec un premier organe de multiplication de coefficient $2 (\cos \frac{2 \pi f}{F})$, une deuxième boucle de retour reliant le point commun au premier organe de retard et au premier organe de multiplication au premier organe d'addition via un deuxième organe de retard monté en série avec un deuxième organe de multiplication de coefficient $- 1$, le point commun au premier organe de retard et au premier organe de multiplication étant monté commutable, à l'aide d'un deuxième organe de commutation, sur la borne d'initialisation reliée à la borne de sortie du premier organe de mémorisation, le point commun au deuxième organe de retard et au deuxième organe de multiplication étant monté commutable, à l'aide d'un troisième organe de commutation, sur la borne d'initialisation reliée à la borne de sortie du deuxième organe de mémorisation.

5. Dispositif selon la revendication 4, caractérisé en ce que le deuxième générateur est identique au premier générateur.

6. Dispositif selon la revendication 5, dans lequel le premier organe de calcul comporte un organe de division muni de deux bornes d'entrée et d'une borne de sortie, et une mémoire morte contenant une table des tangentes adressée, d'une part, par le signal de sortie de l'organe de division, d'autre part, par les signaux de sortie d'un premier et d'un deuxième détecteur de signe munis chacun d'une borne d'entrée, caractérisé en ce qu'il comporte un filtre numérique non récursif de fonction de transfert en z :

$$H_2(z) = 1 - e^{-j\frac{2\pi f}{F}} \cdot z^{-1}$$

muni d'une borne d'entrée reliée à la borne de sortie du premier générateur et de deux bornes de sortie fournissant respectivement la partie réelle et la partie imaginaire du signal de sortie du filtre numérique non récursif, chacune d'elles étant reliée à l'une des bornes d'entrée de l'organe de division et à la borne d'entrée de l'un des détecteurs de signe.

7. Dispositif selon la revendication 6, caractérisé en ce que le deuxième organe de calcul est identique au premier organe de calcul.

8. Dispositif selon la revendication 7, caractérisé en ce que l'organe de comparaison est muni d'une borne d'entrée destinée à recevoir le signal d'entrée y, d'une borne d'entrée reliée à la borne de sortie du premier organe de commutation et d'une borne de sortie fournissant les signaux de commande du premier, du deuxième et du troisième organe de commutation.

5

9. Dispositif selon la revendication 8, caractérisé en ce que l'organe de soustraction présente une borne d'entrée connectée à la borne de sortie du premier organe de calcul, une borne d'entrée connectée à la borne de sortie du deuxième organe de calcul et une borne de sortie fournissant le signal d'entrée de l'organe de substitution.

Fig. 1

1/2

0004822

2/2

Fig.2

0004822

Fig.3

0004822

Office européen
des brevets

RAPPORT DE RECHERCHE EUROPEENNE

Numéro de la demande
EP 79 40 0229

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | |
| | ELECTRONICS AND COMMUNICATIONS IN JAPAN, vol. J 59-A, no. 2, 1976, Tokyo M. KATO et H. HINOSE "DDM Differentially Coherent Detection of DPSK Signals", pages 40-50. * Figure 4 * -- | 1,2,6, 9 | H 04 L 27/22 |
| | NACHRICHTENTECHNISCHE ZEITSCHRIFT, 1972, no. 7 Berlin F.G. BRAUN et F. PELLANDINI: "Frequenzdetektion mit dämpfungsfreien digitalen Resonatoren", pages 325-329. * Figure 1b * -- | 1,4,5 | |
| A | MITTEILUNGEN AGEN, no. 11, juillet 1970 Berne J. TOEDTLI et J. PFUND: "Digitaler Oszillator", pages 32-39. * Figure 1 * ---- | 1,4,5 | |

**DOMAINES TECHNIQUES RECHERCHES (Int. Cl.³)**

H 04 L 27/18
27/22
5/12

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

| X | Le présent rapport de recherche a été établi pour toutes les revendications | |
|---|---|---|
| Lieu de la recherche La Haye | Date d'achèvement de la recherche 21-05-1979 | Examinateur GEISLER |

OEB Form 1503.1 06.78